# EUROPEAN PATENT APPLICATION

(11) **EP 3 297 000 A1**
(43) Date of publication of application: **21.03.2018**
(21) Application number: 16002006.1
(22) Date of filing: 15.09.2016
(51) Int. Cl.: H01B 1/02, H01B 7/28

(54) **FLEXIBLE FIBER AND RESIN COMPOSITE CORE OVERHEAD WIRE AND PRODUCTION METHOD THEREOF**

(71) Applicant: Fogang Xinyuan Hengye Cable Technology Co. Ltd., 511600 Qingyuan City (CN)
(72) Inventor: Wang, Qingming, Qingyuan City, 511600 (CN); Zhu, Yan, Qingyuan City, 511600 (CN)
(74) Representative: Petri, Lars

(57) **Abstract**

A flexible fiber and resin composite core overhead wire and a production method thereof is disclosed. The overhead wire comprises a wire core comprising a main core and a plurality of auxiliary cores spirally and tightly stranded on the main core, and a conducting layer coating the wire core and comprising at least one aluminum wire layer, wherein the main core and the auxiliary cores comprises fiber resin strands formed by fiber filament bundles permeated with resin through moulding, and fiber filaments wound on and completely covering the fiber resin strands such that the fiber resin strand is isolated from the outside, and the at least one aluminum wire layer comprises a plurality of aluminum wires spirally and tightly stranded on the wire core.

## Description

The invention is applicable in the field of overhead cables, and in more particular relates to a flexible fiber and resin composite core overhead wire and a production method thereof

Conventional power transmission is carried out via a steel-cored aluminium wire. As this type of wires is significantly influenced by temperature during a power transmission process, sag problems are inevitable. Recently, a novel carbon fiber composite core wire was provided in the prior art, which is formed by fibers used as aggregates compounded with a resin matrix consisting of various substances, its wire core is coated with a conductor. As having a higher elastic modulus and a smaller thermal expansion coefficient, such a wire core has an improved ampere capacity, thus the wire not only is high in transmission capacity, but also has high-temperature resistance, without an significant sag, thereby exhibiting excellent performance and long service life. The wire represents a tendency in power transmission line development.

A carbon fiber composite core of an existing carbon fiber composite core aluminium wire mostly consists of a single carbon fiber bar, i.e. a bar-type carbon fiber composite core is used as a reinforced core. Due to the limitations of its bar-type carbon core structure and bending performance, only the carbon fiber composite core having an area of smaller than 95mm² (the diameter is smaller than 11mm) can be produced, but the sagging performance of such a wire cannot meet the requirements of some specific projects. Moreover, a tension hardware fitting adopted by the existing bar-type carbon fiber aluminium wire is of a wedge-shaped structure, and in the case of temperature changing or swinging by wind, safety cannot be maintained for long. Moreover again, the bar-type carbon core structure used in an existing large-sized bar-type carbon fiber wire is very poor in flexibility, and thus the construction quality is difficult to be guaranteed.

In order to solve the above problems, the present invention provides a flexible fiber and resin composite core overhead wire and a production method thereof. Performance of the flexible fiber and resin composite core overhead wire can be maintained for a long time, safety of the flexible fiber and resin composite core overhead wire can be ensured, and the flexible fiber and resin composite core overhead wire is convenient to be installed and is suitable to be widely produced and applied.

The aim of the invention is achieved by a flexible fiber and resin composite core overhead wire, comprising:
a wire core, comprising a main core and a plurality of auxiliary cores spirally and tightly stranded on the main core, wherein the main core and the auxiliary cores comprise:
   fiber resin strands formed by fiber filament bundles permeated with resin through moulding;
   fiber filaments, wound on and completely covering the fiber resin strands such that the fiber resin strand is isolated from the outside; and
   a conducting layer coating the wire core, and comprising at least one aluminum wire layer, wherein the at least one aluminum wire layer comprises a plurality of aluminum wires spirally and tightly stranded on the wire core.

Furthermore, as an improvement of the technical solution of the present invention, the main core and the auxiliary cores comprise at least one optical fiber unit strand, said at least one optical fiber unit strand comprises at least one optical fiber arranged therein.

Furthermore, as an improvement of the technical solution of the present invention, the main core comprises 1 to 5 fiber resin strands and/or optical fiber unit strands, and one or two layers of the auxiliary cores are arranged on an outer side of the main core, wherein in the case of one layer of the auxiliary cores, 3 to 36 auxiliary cores are stranded as one layer on the main core, and in the case of two layers of the auxiliary cores, 3 to 36 auxiliary cores are stranded as an inner layer on the main core, other 7 to 42 auxiliary cores are stranded as an outer layer on an outer side of the inner layer of the auxiliary cores, and the two layers of auxiliary cores are opposite in stranding direction.

Furthermore, as an improvement of the technical solution of the present invention, the stranding direction of the aluminium wires of the aluminium wire layer adjacent to the wire core is opposite to the stranding direction of the auxiliary cores, and in the case of at least two aluminium wire layers, the aluminium wires in each two adjacent aluminium wire layers are opposite in stranding direction.

Furthermore, as an improvement of the technical solution of the present invention, the conducting layer comprises four aluminium wire layers, of which the aluminium wires have a trapezoid cross section, the four aluminium wire layers have m, n, o and p aluminium wires from inside to outside respectively, which are natural numbers greater than 5.

Furthermore, as an improvement of the technical solution of the present invention, the aluminium wires have a trapezoid, Z-shaped or circular cross section.

Furthermore, as an improvement of the technical solution of the present invention, the conducting layer comprises an inner aluminum wire layer and an outer aluminum wire layer, the aluminium wires of the inner aluminum wire layer have a concave cross section, and the aluminium wires of the outer aluminum wire layer have a convex cross section matched with the concave cross section of the inner aluminum wire layer; the aluminium wires of the inner aluminum wire layer have a convex cross section, and the aluminium wires of the outer aluminum wire layer have a concave cross section matched with the convex cross section of the inner aluminum wire layer.

Furthermore, as an improvement of the technical solution of the present invention, the flexible fiber and resin composite core overhead wire according to claim 1 further comprises a strain clamp and an intermediate connecting tube, wherein the strain clamp comprises a clamp body, a steel anchor and a jumper wire clamper; the steel anchor comprises an anchor ring and an anchor body inserted into a front end of the clamp body; the anchor body comprises a pressure connecting part, a composite core connecting part and a first liner tube, wherein the pressure connecting part is provided with a plurality of annular grooves formed on an outer wall thereof, and the composite core connecting part is provided with an insertion hole formed therein, in which the first liner tube is arranged for tightly embracing the wire core; the clamp body has a steel anchor pressure connecting end formed at a front end thereof for a pressure connection with the pressure connecting part of the anchor body, and a wire pressure connecting end formed at a rear end thereof for a pressure connection with the conducting layer; the jumper wire clamper comprises a connecting block and a drainage block, wherein the connecting block comprises a hoop sleeved and welded on a middle part of the clamp body, and a drainage seat drooping downwards; the drainage seat is provided with a groove with an inverted U-shaped cross section formed at a lower portion thereof, and a deformation slot formed in a bottom position of the groove; the drainage seat are further provided with bolt holes formed at both sides of the groove; a top end of the drainage block is embedded into the groove and fastened by bolts mounted in the bolt holes; the intermediate connecting tube comprises a second liner tube for pressure-connecting two wire cores, and a steel tube and an aluminium tube for pressure-connecting two conducting layers and, the aluminium tube is sleeved on the steel tube.

The invention further provides a production method of the flexible fiber and resin composite core overhead wire, which comprises the following steps:
S1: preparing fiber resin strands via moulding with fiber filament bundles permeated with resin, and winding fiber filaments on each of the fiber resin strands, wherein the fiber resin strands have a circular, semicircular shape, polygonal cross section or their combinations, and the fiber filaments completely cover the fiber resin strands so as to isolate the fiber resin strands from the outside;
S2: stranding the fiber resin strands into one core having a circular, semicircular, or a polygonal cross section or their combinations, followed by heating the core gained via a heating device to obtain a flexible fiber and resin composite core, wherein one of the fiber resin strands is served as a main core and the other fiber resin strands are served as the auxiliary cores; and
S3: according to a structure of the overhead wire, winding a duralumin or semi-duralumin or soft aluminium or heat-resisting aluminium alloy conducting layer on the flexible fiber and resin composite core which is served as a reinforced core to obtain the flexible fiber and resin composite core overhead wire.

Furthermore, as an improvement of the technical solution of the present invention, the method further comprises in the step S2:
replacing one or more of the fiber resin strands which is served as the main core or the auxiliary cores with optical fiber unit strands, wherein each of the optical fiber unit strands comprises at least one optical fiber in the inside thereof, the auxiliary cores are spirally and closely stranded on the main core to form a flexible fiber and optical fiber composite core, the flexible fiber and resin composite core and the flexible fiber and optical fiber composite core are additionally covered by an aluminium tubular layer or wrapped an aluminium-plastic compound tape..

The invention has the beneficial effects that: compared with a conventional wire, the flexible fiber and resin composite core overhead wire has a series of advantages such as light weight, high tensile strength, high heat resistance, small thermal expansion coefficient, small high-temperature sag, high electrical conductivity, low line loss, high current-carrying capacity, high corrosion resistance, difficulty in ice coating, stable performance for long time, guarantee of safety performance, convenience for installation and the like, and it is an environmental-friendly power transmission line wire, has the epoch-making practical significance on the aspects of protecting the environment, saving energy, reducing emission and improving the human ecological environment, and is suitable to widely produce and apply.

The invention will be further described by embodiments with reference to the accompanying drawings, wherein:
FIG 1 is a schematic view of a wire core according a first embodiment of the invention;
FIG. 2 is a schematic view of a wire core according to a second embodiment of the invention;
FIG. 3 is a schematic view of a wire core according to a third embodiment of the invention;
FIG. 4 is a front view of a wire according to the invention;
FIG. 5 is a schematic view of a wire according to a first embodiment of the invention;
FIG. 6 is a schematic view of a wire according to a second embodiment of the invention;
FIG. 7 is a schematic view of a wire according to a third embodiment of the invention;
FIG. 8 is a schematic view of a wire according to a fourth embodiment of the invention;
FIG. 9 is a schematic view of a wire according to a fifth embodiment of the invention;
FIG. 10 is a schematic view of a wire according to a sixth embodiment of the invention;
FIG. 11 is a schematic view of a wire according to a seventh embodiment of the invention;
FIG. 12 is a schematic view of a wire according to an eighth embodiment of the invention;
FIG. 13 is a schematic view of a wire according to a ninth embodiment of the invention;
FIG. 14 is a schematic view of a wire according to a tenth embodiment of the invention;
FIG. 15 is a schematic view of a wire according to an eleventh embodiment of the invention;
FIG. 16 is a front view of a strain clamp according to the invention;
FIG. 17 is a side view of the strain clamp according to the invention;
FIG. 18 is a schematic view of an aluminium tube of an intermediate connecting tube according to the invention;
FIG. 19 is a schematic view of a steel tube of the intermediate connecting tube according to the invention;
FIG. 20 is a schematic view of a second liner tube of the intermediate connecting tube according to the invention.

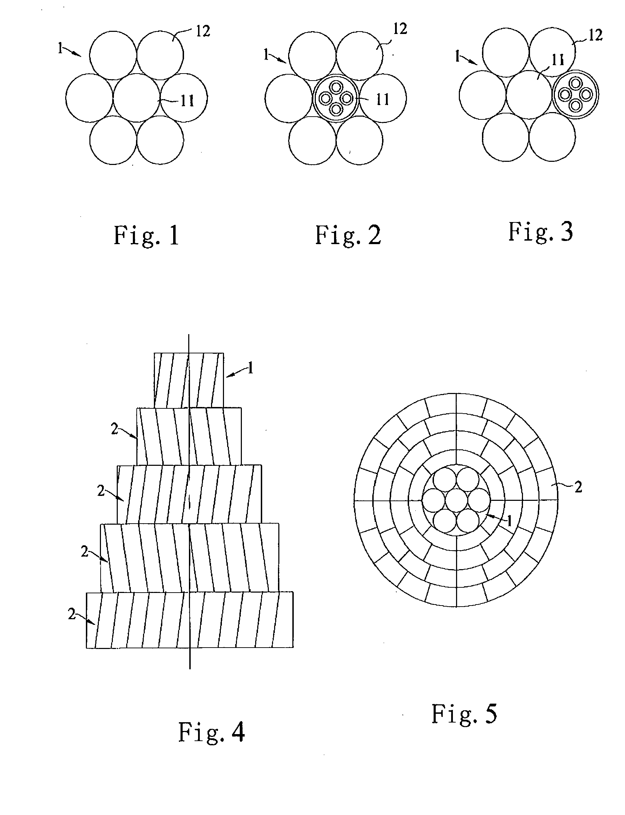

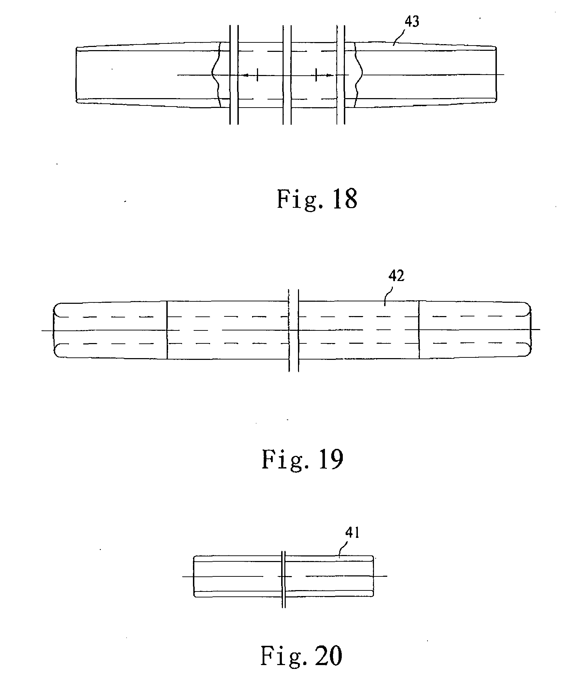

In Figs. 1 to 20, some specific structures in preferable embodiments of the invention are shown. Structural characteristics of the components according to the invention will be described in detail in the following.

The invention provides a flexible fiber and resin composite core overhead wire which comprises a wire core 1, and a conducting layer 2 wrapping the wire core 1. As shown in Fig. 1, the wire core 1 comprises a main core 11 and a plurality of auxiliary cores 12 spirally and closely stranded on the main core 11. The main core 11 and the auxiliary cores 12 comprise fiber resin strands, which are formed by resin-permeated fiber filament bundles through moulding. Fiber filaments are wound on an outer surfaces of each of the fiber resin strands and thus completely cover the fiber resin strands to isolate the fiber resin strands from the outside to protect the fiber resin strands from damage by friction, as well as to avoid direct contact between the fiber resin strands and an conductive aluminium wire for the overhead wire to avoid chemical corrosion between the fiber resin strands and the aluminium wire. The conducting layer 2 comprises at least one aluminium wire layer comprising a plurality of aluminium wires spirally and closely stranded on an outer side of the wire core 1.

As shown in Figs. 2 and 3, the main core 11 and the auxiliary cores 12 of the wire core 1 comprise one or more optical fiber unit strands, and each of the optical fiber unit strands comprises at least one optical fiber arranged therein. In other words, one or more of the fiber resin strands are replaced with the optical fiber unit strands to form a flexible fiber and resin composite core comprehensive optical fiber overhead wire with communication optical fibers. A resulting product can resist a temperature of 150°C and above, as well as has strength of 2100MPa and above. The overhead wire with optical fiber units has a communication function.

According to the invention, the wire core 1 is served as a reinforced core, and an aluminium alloy conducting layer 2 is wound on an outer side of the wire core 1 according to a structure of the overhead wire. Specifically, the aluminium alloy conducting layer 2 may be a duralumin or semi-duralumin or soft aluminium or heat-resisting aluminium alloy conducting layer 2, with a circular, trapezoid, or S-shaped wire shape, or their combinations, resulting in various forms of flexible fiber and resin composite core overhead wires and flexible fiber and resin composite core comprehensive optical fiber overhead wires. Compared with a single-core fiber (bar-type) composite core with a conventional structure, the flexible fiber and resin composite core comprehensive optical fiber overhead wire according to the invention has higher flexibility and can guarantee a construction project to be successfully carried out. Moreover, the flexible fiber and resin composite core comprehensive optical fiber overhead wire according to the invention has excellent sagging performance, and thus is more suitable for an extra-large span line.

In detail, the main core 11 comprises 1 to 5 fiber resin strands and/or optical fiber unit strands, and one or two layers of auxiliary cores 12 are arranged on the outer side of the main core 11. In the case of one layer of auxiliary cores 12 arranged, 3 to 36 auxiliary cores 12 are stranded into one layer on the main core 11. In the case of two layers of auxiliary cores 12 arranged, 3 to 36 auxiliary cores 12 are stranded into an inner layer on the outer side of the main core 11, and 7 to 42 auxiliary cores 12 are stranded into an outer layer on an outer side of the inner layer of the auxiliary cores 12, wherein the two layers of auxiliary cores 12 are opposite in stranding direction.

As shown in Fig. 4, the stranding direction of the aluminium wires of the aluminium wire layer adjacent to the wire core 1 is opposite to the stranding direction of the auxiliary cores 12, and when the conducting layer 2 comprises at least two aluminium wire layers, the aluminium wires in each two adjacent aluminium wire layers are opposite in stranding direction.

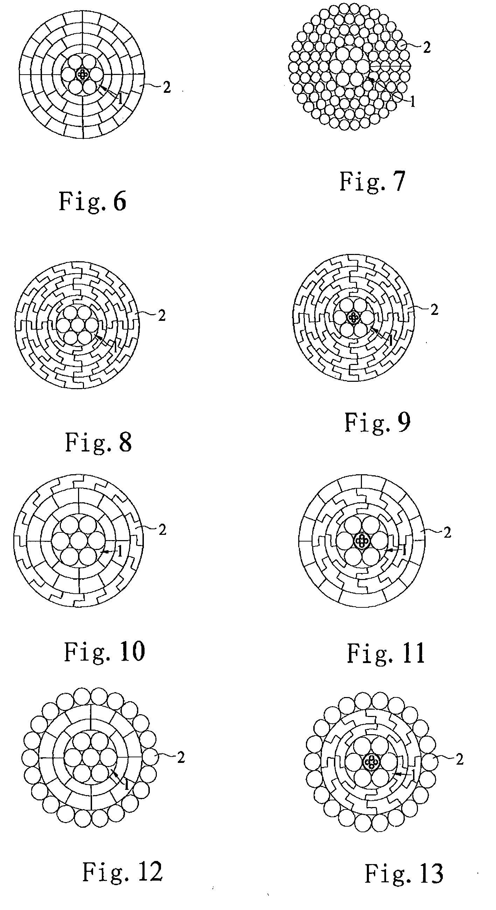

As shown in Figs. 5 and 6, the conducting layer 2 comprises four aluminium wire layers, of which the aluminium wires have a trapezoid cross section. The four aluminium wire layers respectively have a number of m, n, o and p aluminium wires from inside to outside sequentially, wherein m, n, o and p are natural numbers greater than 5.

As shown in Figs. 7 to 15, the aluminium wires have a trapezoid, Z or circular cross section, or their combinations, resulting in various wire forms.

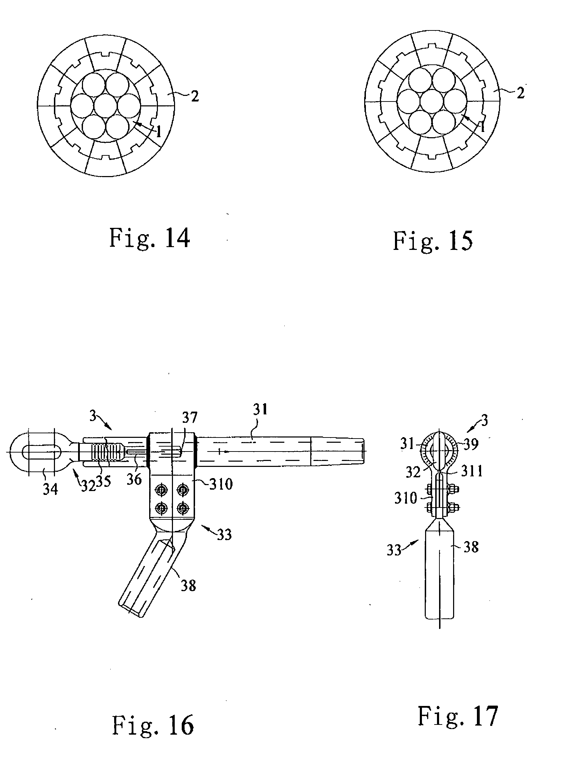

Specifically, as shown in Figs. 14 and 15, the aluminium wire layers are divided into an inner layer and an outer layer, the aluminium wires in the inner layer have a concave cross section, and the aluminium wires in the outer layer have a convex cross section matched with the concave cross section of the aluminium wires in the inner layer. Alternatively, the aluminium wires in the outer layer have a concave cross section, and the aluminium wires in the inner layer have a convex cross section matched with the concave cross section of the aluminium wires in the outer layer. In such a concave and convex arrangement, the number of the soft aluminium wires in the inner layer is equal to that of the soft aluminium wires in the outer layer, the aluminium wires are one-to-one matched, so that the inner and outer layers of the soft aluminium wires can be more tightly connected.

As shown in Figs. 16 to 20, the flexible fiber and resin composite core overhead wire according the invention further comprises a strain clamp 3. The strain clamp 3 comprises a clamp body 31, a steel anchor 32 and a jumper wire clamper 33. The steel anchor 32 comprises an anchor ring 34 and an anchor body inserted into a front end of the clamp body 31. The anchor body comprises a pressure connecting part 35 provided with a plurality of circular grooves formed on an outer wall thereof, and a composite core connecting part 36 provided with an insertion hole formed therein. The strain clamp 3 further comprises a first liner tube 37 arranged in the insertion hole for embracing the wire core 1. The clamp body 31 has a steel anchor 32 pressure connecting end formed at a front end thereof and capable of maintaining a pressure connection with the pressure connecting part 35 of the anchor body, and a wire pressure connecting end formed at a rear end thereof and capable of maintaining a pressure connection with the conducting layer 2. The jumper wire clamper 33 comprises a connecting block and a drainage block 38, wherein the connecting block comprises a hoop 39 sleeved and welded on a middle part of the clamp body 31, and a drainage seat 310 drooping downwards. The drainage seat 310 is provided with a groove formed at a lower part thereof and having an inverted U-shaped cross section, and a deformation slot 311 formed in a bottom portion of the groove. The drainage seat 310 is further provided with bolt holes formed at both sides of the groove. A top end of the drainage block 38 is embedded into the groove and is fastened by bolts mounted in the bolt holes. To connect the wire with the strain clamp 3, firstly stripping out the wire core 1, sleeving the first liner tube 37 on the wire core 1, and then inserting the wire core 1 sleeved with the first liner tube 37 into the insertion hole formed on the composite core connecting part 36 and pressure them for connection, and then inserting the steel anchor 32 into the clamp body 31 such that the steel anchor 32 pressure connecting end of the clamp body 31 is pressure-connected with the pressure connecting part 35 of the anchor body, and finally pressure-connecting the wire pressure connecting end with the conducting layer 2.

The flexible fiber and resin composite core overhead wire further comprises an intermediate connecting tube for connecting two wires. The intermediate connecting tube comprises a second liner tube 41 for pressure-connecting two wire cores 1, a steel tube 42 for pressure-connecting two conducting layers 2, and an aluminium tube 43 sleeved on the steel tube 42. As the pressure connecting type strain clamp 3 and the intermediate connecting tube are used, the flexible fiber and resin composite core overhead wire according to the invention can provide higher safety and greater construction convenience than a wire with the single-core fiber (bar-type) composite core in which a wedge-shaped locking type tension hardware fitting is used. The pressure connecting type strain clamp 3 and intermediate connecting tube have a modular structure, solving an engineering difficulty in the existing art that the flexible fiber and resin composite core overhead wire cannot be connected with the strain clamp 3 and the intermediate connecting tube, and maximizing the mechanical performance of the flexible resin fiber composite core overhead wire.

The invention further provides a production method of the flexible fiber and resin composite core overhead wire, comprising the following steps:
S1: forming fiber resin strands with resin-permeated fiber filament bundles through moulding, and wrapping fiber filaments on an outer side of the fiber resin strands formed, wherein the fiber resin strands have a circular, semicircular, or a polygonal cross section or their combinations, and the fiber filaments completely cover the fiber resin strands to isolate the fiber resin strands from the outside to protect the fiber resin strands from friction damage, as well as to avoid direct contact between the fiber resin strands and an electrical aluminium wire for the overhead wire to avoid chemical corrosion between the fiber resin strands and the aluminium wire;
S2: stranding one of the fiber resin strands, served as a main core, with the other fiber resin strands, served as auxiliary cores, into one having a circular, semicircular or polygon cross section or their combinations, followed by heating them via a heating device to form a flexible fiber and resin composite core via; and
S3: according to a structure of the overhead wire, winding a duralumin or semi-duralumin or soft aluminium or heat-resisting aluminium alloy conducting layer on an outer side of the flexible fiber and resin composite core which is served as a reinforced core to form the flexible fiber and resin composite core overhead wire.

Specifically, in step S2, one or more of the fiber resin strands may be replaced by optical fiber unit strands, served as the main core or the auxiliary cores, wherein each of the optical fiber unit strands comprises at least one optical fiber therein. The auxiliary cores are spirally and closely stranded on the main core to form a flexible fiber and optical fiber composite core, and additionally, an aluminium tubular layer or an aluminium-plastic compound tape is wrapped on an outer side of the flexible fiber and resin composite core and the flexible fiber and optical fiber composite core.

The flexible fiber and resin composite core overhead wire or the flexible fiber and resin composite core comprehensive optical-fiber overhead wire according to the invention is an energy-saving type capacity-increasing wire with a brand new structure. Compared with a conventional wire, the wire of the invention has advantages including light weight, high tensile strength, high heat resistance, small thermal expansion coefficient, small high-temperature sag, high electrical conductivity, low line loss, high current-carrying capacity, high corrosion resistance, difficult to be coated by ice and the like. It is an environmental-friendly power transmission line wire, and has the epoch-making practical significance on the aspects of protecting the environment, saving energy, reducing emission and improving the human ecological environment. The invention further combines the flexible fiber and resin composite core with the optical fiber technology to provide the flexible fiber and resin composite core comprehensive optical fiber overhead wire, which has functions from both the overhead wire and communication wire, as well as benefits from the advantages of the flexible fiber and resin composite core overhead wire. The wire of the invention greatly satisfies the requirements of various operational environments and particularly of large span overhead lines for power and communication transmission.

Certainly, the invention creation is not limited to the embodiments above, those skilled in the art also can make equivalent modifications or replacements without departure from the spirit of the invention, and those equivalent modifications or replacements shall fall within the scope defined by the claims of the application.

## Claims

1. Flexible fiber and resin composite core overhead wire, comprising:
a wire core (1), comprising a main core (11) and a plurality of auxiliary cores (12) spirally and tightly stranded on the main core (11), wherein the main core (11) and the auxiliary cores (12) comprise:
fiber resin strands formed by fiber filament bundles permeated with resin through moulding;
fiber filaments, wound on and completely covering the fiber resin strands such that the fiber resin strand is isolated from the outside; and
a conducting layer (2) coating the wire core (1), and comprising at least one aluminum wire layer, wherein the at least one aluminum wire layer comprises a plurality of aluminum wires spirally and tightly stranded on the wire core (1).

2. Flexible fiber and resin composite core overhead wire according to claim 1, wherein the main core (11) and the auxiliary cores (12) comprise at least one optical fiber unit strand, said at least one optical fiber unit strand comprises at least one optical fiber arranged therein.

3. Flexible fiber and resin composite core overhead wire according to claim 2, wherein the main core (11) comprises 1 to 5 fiber resin strands and/or optical fiber unit strands, and one or two layers of the auxiliary cores (12) are arranged on an outer side of the main core (11), wherein in the case of one layer of the auxiliary cores (12), 3 to 36 auxiliary cores (12) are stranded as one layer on the main core (11), and in the case of two layers of the auxiliary cores (12), 3 to 36 auxiliary cores (12) are stranded as an inner layer on the main core (11), other 7 to 42 auxiliary cores (12) are stranded as an outer layer on an outer side of the inner layer of the auxiliary cores (12), and the two layers of auxiliary cores (12) are opposite in stranding direction.

4. Flexible fiber and resin composite core overhead wire according to claim 1, wherein the stranding direction of the aluminium wires of the aluminium wire layer adjacent to the wire core (1) is opposite to the stranding direction of the auxiliary cores (12), and in the case of at least two aluminium wire layers, the aluminium wires in each two adjacent aluminium wire layers are opposite in stranding direction.

5. Flexible fiber and resin composite core overhead wire according to claim 1, wherein the conducting layer (2) comprises four aluminium wire layers, of which the aluminium wires have a trapezoid cross section, the four aluminium wire layers have m, n, o and p aluminium wires from inside to outside respectively, which are natural numbers greater than 5.

6. Flexible fiber and resin composite core overhead wire according to claim 1, wherein the aluminium wires have a trapezoid, Z-shaped or circular cross section.

7. Flexible fiber and resin composite core overhead wire according to claim 1, wherein the conducting layer (2) comprises an inner aluminum wire layer and an outer aluminum wire layer, the aluminium wires of the inner aluminum wire layer have a concave cross section, and the aluminium wires of the outer aluminum wire layer have a convex cross section matched with the concave cross section of the inner aluminum wire layer; the aluminium wires of the inner aluminum wire layer have a convex cross section, and the aluminium wires of the outer aluminum wire layer have a concave cross section matched with the convex cross section of the inner aluminum wire layer.

8. Flexible fiber and resin composite core overhead wire according to claim 1, further comprising a strain clamp (3) and an intermediate connecting tube, wherein the strain clamp (3) comprises a clamp body (31), a steel anchor (32) and a jumper wire clamper (33); the steel anchor (32) comprises an anchor ring (34) and an anchor body inserted into a front end of the clamp body (31); the anchor body comprises a pressure connecting part (35), a composite core connecting part (36) and a first liner tube (37), wherein the pressure connecting part (35) is provided with a plurality of annular grooves formed on an outer wall thereof, and the composite core connecting part (36) is provided with an insertion hole formed therein, in which the first liner tube (37) is arranged for tightly embracing the wire core (1); the clamp body (31) has a steel anchor (32) pressure connecting end formed at a front end thereof for a pressure connection with the pressure connecting part (35) of the anchor body, and a wire pressure connecting end formed at a rear end thereof for a pressure connection with the conducting layer (2); the jumper wire clamper (33) comprises a connecting block and a drainage block (38), wherein the connecting block comprises a hoop (39) sleeved and welded on a middle part of the clamp body (31), and a drainage seat (310) drooping downwards; the drainage seat (310) is provided with a groove with an inverted U-shaped cross section formed at a lower portion thereof, and a deformation slot (311) formed in a bottom position of the groove; the drainage seat (310) are further provided with bolt holes formed at both sides of the groove; a top end of the drainage block (38) is embedded into the groove and fastened by bolts mounted in the bolt holes; the intermediate connecting tube comprises a second liner tube (41) for pressure-connecting two wire cores (1), and a steel tube (42) and an aluminium tube (43) for pressure-connecting two conducting layers (2) and, the aluminium tube (43) is sleeved on the steel tube (42).

9. Method of producing a flexible fiber and resin composite core overhead wire, comprising the following steps:
S1: preparing fiber resin strands via moulding with fiber filament bundles permeated with resin, and winding fiber filaments on each of the fiber resin strands, wherein the fiber resin strands have a circular, semicircular shape, polygonal cross section or their combinations, and the fiber filaments completely cover the fiber resin strands so as to isolate the fiber resin strands from the outside;
S2: stranding the fiber resin strands into one core having a circular, semicircular, or a polygonal cross section or their combinations, followed by heating the core gained via a heating device to obtain a flexible fiber and resin composite core, wherein one of the fiber resin strands is served as a main core (11) and the other fiber resin strands are served as the auxiliary cores (12); and
S3: according to a structure of the overhead wire, winding a duralumin or semi-duralumin or soft aluminium or heat-resisting aluminium alloy conducting layer (2) on the flexible fiber and resin composite core which is served as a reinforced core to obtain the flexible fiber and resin composite core overhead wire.

10. Method of producing a flexible fiber and resin composite core overhead wire according to claim 9, in step S2 further comprising:
replacing one or more of the fiber resin strands which is served as the main core (11) or the auxiliary cores (12) with optical fiber unit strands, wherein each of the optical fiber unit strands comprises at least one optical fiber in the inside thereof, the auxiliary cores (12) are spirally and closely stranded on the main core (11) to form a flexible fiber and optical fiber composite core, the flexible fiber and resin composite core and the flexible fiber and optical fiber composite core are additionally covered by an aluminium tubular layer or wrapped an aluminium-plastic compound tape.
